# EUROPEAN PATENT APPLICATION

(11) **EP 4 589 725 A1**
(43) Date of publication of application: **23.07.2025**
(21) Application number: 23865897.5
(22) Date of filing: 15.09.2023
(51) Int. Cl.: H01M 10/54, F27D 19/00, F27D 5/00

(54) **VERTICAL RECYCLING DEVICE FOR WASTE BATTERY**

(30) Priority: 16.09.2022 KR 20220117269; 14.09.2023 KR 20230122682
(71) Applicant: RD Solution Co., Ltd., Jeollabuk-do 55365 (KR)
(72) Inventor: YOON, Jeongsuk, Daejeon 35211 (KR); YU, Jongyeong, Daejeon 35211 (KR); KWON, Yongjun, Daejeon 35211 (KR)
(74) Representative: Jung, Minkyu
(86) International application number: PCT/KR2023/013916
(87) International publication number: WO 2024/058601

(57) **Abstract**

The present invention provides an apparatus for vertical recycling of waste batteries, the apparatus including a heating part heating objects located inside a working part, a temperature measurement part measuring a temperature of the working part or the heating part, and a controller controlling an internal temperature of the working part, wherein the apparatus further includes an input part feeding the objects to the working part and a discharge part withdrawing the objects from the working part. According to the present invention, by varying the temperature configuration according to positions where heat treatment is performed on objects, heat treatment efficiency can be maximized in work sections focused on miniaturization of the objects and reduction of the objects, and since it is possible to, for waste batteries made of compounds formed of various materials, heat the waste batteries at various temperatures, the amount of valuable metal that can be recovered per same time can be maximized.

## Description

### [Technical Field]

The present invention relates to an apparatus for vertical recycling of waste batteries. Specifically, the present invention relates to an apparatus for vertical recycling of waste batteries that selectively controls temperatures of different positions where objects are heated inside a kiln, induces easier heat treatment and firing of waste batteries, and prevents the generation of harmful substances.

### [Background Art]

Generally, the demand for renewable batteries such as lithium-ion batteries has increased exponentially with their common use in wireless phones, smartphones, mobile devices, electric vehicles, etc., and nowadays, battery packs containing large-scale battery cells are being used in numerous industrial fields including transportation and power storage. Accordingly, interest in methods of disposal of waste batteries that have lost their functions after use have increased, and related research is underway. A large amount of research is being conducted by each country and major battery disposal-related companies to resupply raw materials used in batteries and address a problem of environmental pollution.

In line with this situation, a technology for extracting usable raw materials from waste batteries through a hydrometallurgical process can be used for waste batteries. However, the the hydrometallurgical process needs to be preceded by pretreatment processes such as cleaning, discharge, disassembly, and fine grinding and thus is expensive and requires a large amount of time and generates a large amount of wastewater and chemical waste, which is considered a major cause of various environmental pollution.

Accordingly, a existing pyrometallurgical process that has an advantage that it can address the problems of the hydrometallurgical process for used lithium-ion batteries has emerged, but there are problems in that a recovery rate of raw materials from waste batteries is low, a large amount of greenhouse gases is emitted, and a high level of facility investment is required.

In addition, since conventional heat treatment apparatuses for recycling waste batteries have heat treatment means with a horizontal structure for heat treatment of waste batteries, there are problems in that the number of items that workers must pay attention to, such as the movement of gas required for heat treatment, is large, and thermal efficiency is low because independent temperature control is not possible.

### [Disclosure]

### [Technical Problem]

Various embodiments of the present invention are intended to address the above problems and is directed to preventing a decrease in thermal efficiency by imparting an independent firing temperature in a heating process for recycling waste batteries.

The present invention is also directed to maximizing a recovery rate of valuable metals, minimizing the generation of harmful substances, and maximizing firing efficiency.

Objectives of the present invention are not limited to those mentioned above, and other unmentioned objectives should be clearly understood by those of ordinary skill in the art based on the description below.

### [Technical Solution]

To this end, the present invention provides an apparatus for vertical recycling of waste batteries, the apparatus including a heating part heating objects located inside a working part, a temperature measurement part measuring a temperature of the working part or the heating part, and a controller controlling an internal temperature of the working part, wherein the apparatus further includes an input part feeding the objects to the working part and a discharge part withdrawing the objects from the working part.

In addition, the input part of the present invention may include a movable partition part controlling connection of an inner space between the working part and the input part, and the working part may include a first working part where a first internal temperature is created, a second working part having a second internal temperature at a lower side of the first working part, and a third working part having a third internal temperature at a lower side of the second working part.

In addition, the apparatus may further include a fixing part formed between the first working part and the second working part or the third working part to fix positions of the objects, and the heating part may include a first heating part, a second heating part located at a lower side of the first heating part, and a third heating part located at a lower side of the second heating part.

In addition, the recycling apparatus of the present invention may further include a fireproof part protecting the heating part inside the working part, and the fireproof part may include a first fireproof part located inward from the heating part, a second fireproof part disposed to surround the heating part, and a third fireproof part located outward from the heating part.

In addition, the recycling apparatus of the present invention may further include a gas supply part inputting a predetermined gas to the working part from inside the discharge part, and the predetermined gas may consist of at least one or more of carbon monoxide, carbon dioxide, nitrogen, and argon.

In addition, the recycling apparatus of the present invention may further include a second opening/closing part partitioning an inner space of the discharge part, a second gas discharge part ventilating at least one or more portions of the partitioned inner space of the discharge part, and a storage part into which the objects are input to move and be heated together, and the storage part may include a body part having first through-holes and a mesh part located inside the body part and having second through-holes.

### [Advantageous Effects]

According to an embodiment of the present invention, by varying the temperature configuration according to positions where heat treatment is performed on objects, heat treatment efficiency can be maximized in work sections focused on miniaturization of the objects and reduction of the objects.

In addition, since it is possible to, for waste batteries made of compounds formed of various materials, heat the waste batteries at various temperatures, the amount of valuable metal that can be recovered per same time can be maximized.

In addition, through the present invention that adopts a vertical dry heatingmethod, mass treatment of objects is possible without performing pretreatment processes thereon, and the generation of harmful substances can be minimized.

Advantageous effects of the present invention are not limited to those mentioned above, and other unmentioned advantageous effects should be clearly understood by those of ordinary skill in the art based on the description below.

### [Description of Drawings]

FIG. 1 is an overall view of an apparatus for vertical recycling of waste batteries according to an embodiment of the present invention.
FIG. 2 is a cross-sectional view of the apparatus for vertical recycling of waste batteries according to an embodiment of the present invention.
FIG. 3 is a cross-sectional view illustrating a working part and a discharge part according to an embodiment of the present invention.
FIG. 4 is a view illustrating a process of controlling internal temperatures of a first working part, a second working part, and a third working part according to an embodiment of the present invention.
FIG. 5 is a cutout perspective view illustrating an insertion section part according to an embodiment of the present invention.
FIG. 6 is a view illustrating a storage part moving to its correct position due to a first guide part according to an embodiment of the present invention.
FIG. 7 is a cross-sectional view illustrating a first opening/closing part according to an embodiment of the present invention.
FIG. 8 is a cutout perspective view illustrating a standby section part according to an embodiment of the present invention.
FIG. 9 is a view illustrating objects after 30 minutes based on Comparative Example 1 of the present invention.
FIG. 10 is a view illustrating the objects after 40 minutes based on Comparative Example 1 of the present invention.
FIG. 11 is a view illustrating objects after 30 minutes based on Comparative Example 2 of the present invention.
FIG. 12 is a view illustrating the objects after 40 minutes based on Comparative Example 2 of the present invention.
FIG. 13 is a view illustrating objects after 30 minutes based on Example 1 of the present invention.
FIG. 14 is a view illustrating the objects after 40 minutes based on Example 1 of the present invention.
FIG. 15 is a view illustrating the storage part according to an embodiment of the present invention.
FIG. 16 is a view illustrating a storage part according to another embodiment of the present invention.
FIG. 17 is a view illustrating an embodiment of a mesh part according to the present invention.
FIG. 18 is a view illustrating a storage part having an upper end engaging part and a lower end engaging part formed thereon.
FIG. 19 is a view illustrating a storage part having a first contact part and a second contact part further formed thereon.
FIG. 20 is a view illustrating a storage part being fixed by a fixing part according to the present invention.
FIG. 21 is a view illustrating another embodiment of a storage part being fixed by a fixing part according to the present invention.
FIG. 22 is an overall view of a storage part according to an additional embodiment of the present invention.
FIG. 23 is a cutout perspective view of the storage part according to the additional embodiment of the present invention.
FIG. 24 is a cross-sectional view illustrating arrangement of a pair of storage parts in a vertical direction according to the additional embodiment of the present invention.

### [Best Mode of the Invention]

Terms used herein are for describing embodiments and are not intended to limit the present invention. In the specification, a singular expression includes a plural expression unless the context clearly indicates otherwise. The terms "comprises" and/or "comprising" used herein do not preclude the presence or addition of one or more components other than those mentioned. Throughout the specification, the same reference numerals refer to the same components, and the term "and/or" includes any and all combinations of one or more of mentioned components. Although the terms "first," "second," etc., are used herein to describe various components, of course, the components are not limited by the terms. The terms are only used to distinguish one component from another component. Therefore, of course, a first component mentioned below could be termed a second component within the technical spirit of the present invention.

Unless defined otherwise, all terms including technical and scientific terms used herein may be used with meanings that may be commonly understood by those of ordinary skill in the art to which the present invention pertains. Also, terms defined in commonly used dictionaries should not be interpreted in an idealized or overly formal sense unless expressly so defined herein.

Spatially relative terms, such as "below," "beneath," "lower," "above," and "upper," may be used herein for ease of description to describe one component's relationship to other components as illustrated in the figures. The spatially relative terms should be understood as terms encompassing different orientations of components in use or operation in addition to the orientation depicted in the figures. For example, if the component illustrated in the figures is turned over, a component described as "below" or "beneath" another component would then be oriented "above" the other component. Thus, the illustrative term "below" can encompass an orientation of both above and below. The components may also be oriented in different directions, and accordingly, the spatially relative terms may be interpreted according to orientations.

Prior to detailed description of the present invention, "objects" are waste batteries and may be input while in an intact state or a partially ground state. In addition, "worker" is a person who performs a task of recycling waste batteries using an apparatus for vertical recycling of waste batteries according to the present invention, but the present invention is not limited thereto, and "worker" may refer to a person close to the apparatus for vertical recycling of waste batteries according to the present invention.

A waste battery according to one embodiment of the present invention is a concept encompassing all of a battery whose charging efficiency is decreased to a certain level or lower compared to a new battery, a nonreusable battery, and a reusable battery, and specifically, all batteries from which valuable metals or the like can be recovered through the apparatus for vertical recycling according to the present invention may be defined as waste batteries.

In addition, the apparatus for vertical recycling according to the present invention may be applied not only to lithium cobalt oxide (LCO) batteries and three-element-based batteries (nickel-manganese-cobalt (NMC), nickel-cobalt-aluminum (NCA)) that occupy most of the current battery market, but also to lithium iron phosphate (LFP) batteries and lithium titanium oxide (LTO) batteries.

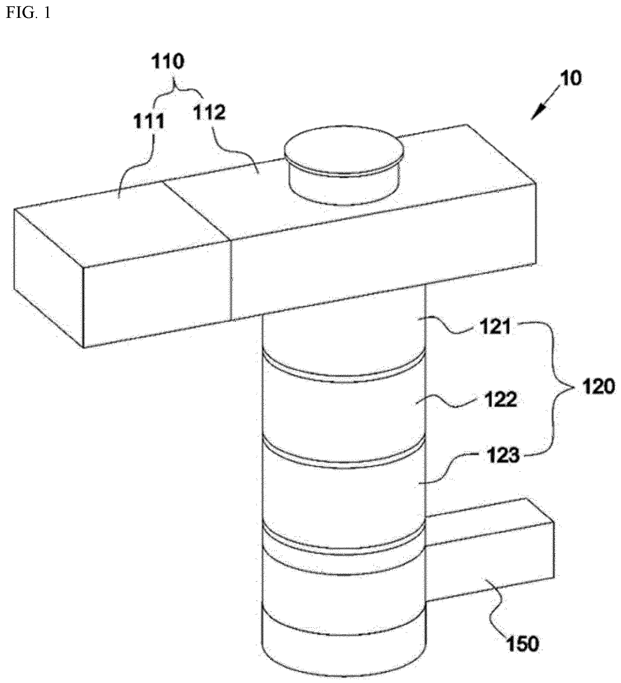

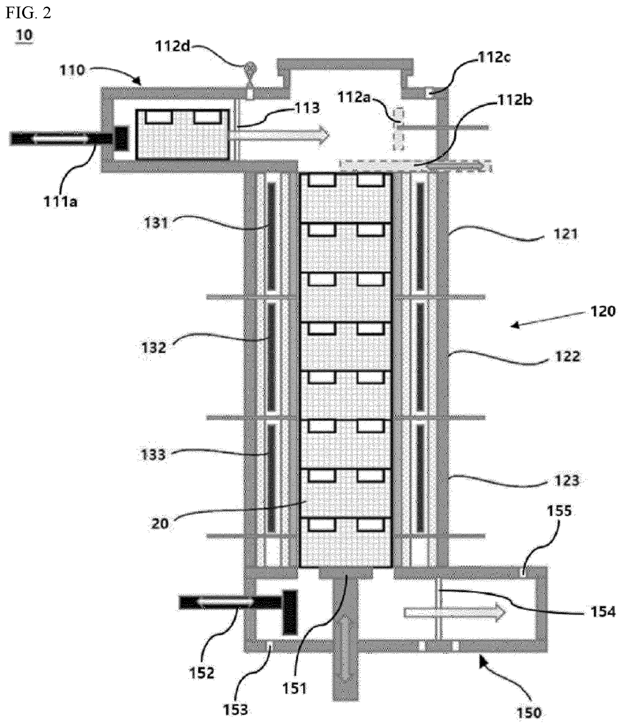

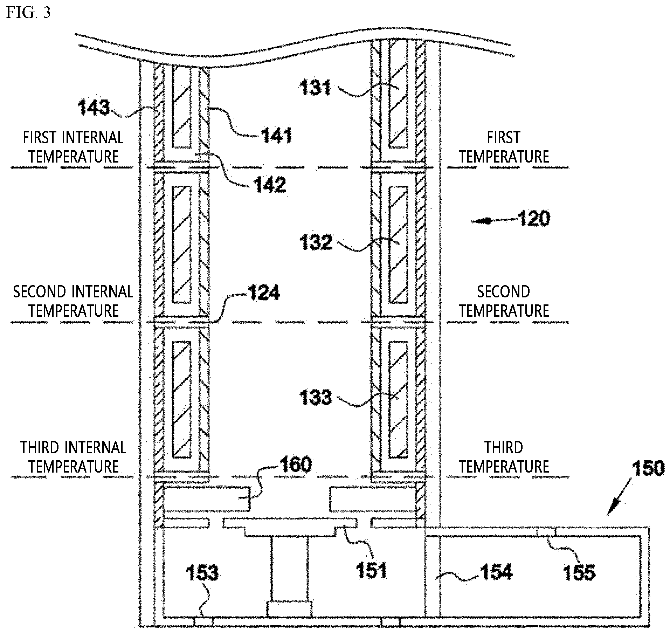

FIG. 1 is an overall view of an apparatus 10 for vertical recycling of waste batteries according to an embodiment of the present invention, and FIG. 2 is a cross-sectional view of the apparatus for vertical recycling of waste batteries according to an embodiment of the present invention. In addition, FIG. 3 is a cross-sectional view illustrating a working part and a discharge part according to an embodiment of the present invention.

The apparatus 10 for vertical recycling of waste batteries according to the present invention is for heating a storage part 20 loaded with objects and obtaining necessary raw materials and includes an input part 110 waiting to input the storage part 20 to a working part, the working part where the storage part 20 is placed to perform the heating task, and a discharge part 150 withdrawing the storage part 20, for which a firing task is completed, from the working part.

The input part 110 includes an insertion section part 111 for inputting the storage part 20 thereto and a standby section part 112 where the input storage part 20 waits before being input to the working part.

The working part consists of a first working part 121, a second working part 122, and a third working part 123 that are disposed in a vertical direction.

The storage part 20 containing the objects is input into the working part through the input part 110, and in this process, arrangement into correct positions and an exhaust process may be performed to facilitate firing.

A vertical heating process is applied to the storage part 20 as the storage part 20 moves from the input part 110 to the working part while sequentially passing through the first working part 121, the second working part 122, and the third working part 123.

The heated storage part 20 moves from the working part to the discharge part 150, is processed through an input of a predetermined gas, is cooled through an input of a cooling gas, and is discharged to the outside.

In a process in which the objects, with which the storage part 20 is loaded, are processed using the above components, a controller 170 controls operations of the input part 110 and the working part, and the control may be implemented in various ways such as adjusting a temperature increase rate in the working part, adjusting a partial pressure of a gas, and operating components in the input part 110 and the discharge part 150. Here, the controller 170 may control at least one or more of a temperature increase rate and a temperature increase time of a heating part.

The input part 110 is a component connected to the working part to supply the storage part 20 thereto and includes the insertion section part, the standby section part, and a first opening/closing part.

Referring to FIGS. 2 and 3, the working part is a component providing a space for heating the objects in a state in which the storage part 20 is disposed in the working part. To this end, the working part is formed in a cylindrical shape open in the vertical direction and induces the objects and the storage part 20 to be heated at once in a state in which the heating part, a fireproof part, and a temperature measurement part 124 are disposed in the working part. In addition, the working part consists of the first working part 121, the second working part 122, and the third working part 123 that are arranged in the vertical direction.

The first working part 121 provides a space for performing an initial heating process on the storage part 20 input from the standby section part 112. To this end, a first internal temperature is created in the first working part 121, the second working part 122 is disposed downward from the first working part 121, and the first working part 121 and the second working part 122 are connected to each other. Since the second working part 122 is located at a lower side of the first working part 121 and has a second internal temperature, the second working part 122 performs a process of secondarily heating the storage part 20. The second working part 122 is connected to each of the first working part 121 and the third working part 123. The third working part 123 is disposed at a lower side of the second working part 122, and a process of tertiarily heating the storage part 20 is performed at a third internal temperature.

In another embodiment of the present invention, the working part may further include a suspension part located downward from the third working part 123. The suspension part is a component for preventing unintended thermal deformation by temporarily suspending the objects and the storage part 20, which are heated through the first working part 121, the second working part 122, and the third working part 123. To this end, the suspension part is configured in the same form as the first working part 121, the second working part 122, and the third working part 123, but does not include the heating part which will be described below. Accordingly, natural cooling may be induced without performing additional heating of the objects and the storage part 20.

The heating part is a means installed in the working part to heat the objects and the storage part 20, and more specifically, is a component for melting the objects. To this end, the heating part may be made of an electrically heated silicon carbide (SiC) resistive heater capable of generating heat at high temperatures, but is not limited thereto. The heating part consists of a first heating part 131, a second heating part 132, and a third heating part 133 that are disposed in the first working part 121, the second working part 122, and the third working part 123, respectively. Here, the first heating part 131, the second heating part 132, and the third heating part 133 may operate independently or together by the controller 170, which will be described below, and may heat the objects and the storage part 20 at the first internal temperature, the second internal temperature, and the third internal temperature.

In still another embodiment of the present invention, at least one or more components among the first heating part 131, the second heating part 132, and the third heating part 133 may be configured as a plurality of heating parts disposed in circular arrangement about a central axis of the working part in the vertical direction. Accordingly, it is possible to save usage of the heating parts and create the first internal temperature, the second internal temperature, and the third internal temperature in a uniform manner. In addition, the first heating part 131, the second heating part 132, and the third heating part 133 may operate independently or together by the controller.

The fireproof part is a component for preventing deterioration of the heating part due to the objects heated inside the working part and preventing sharp changes in the internal temperatures. To this end, the fireproof part is disposed to surround the heating part or disposed close thereto. The fireproof part is provided for the first heating part 131, the second heating part 132, and the third heating part 133 and consists of a first fireproof part 141, a second fireproof part 142, and a third fireproof part 143 that are disposed at different positions.

The first fireproof part 141 is a component protecting the plurality of heating parts while disposed inward therefrom. Specifically, the first fireproof part 141 is located inward to face the central axis of the first working part 121, the second working part 122, and the third working part 123 for the first heating part 131, the second heating part 132, and the third heating part 133. That is, by being disposed to correspond to portions that are inward from the first heating part 131, the second heating part 132, and the third heating part 133, the first fireproof part 141 can prevent deterioration of the heating part due to foreign matter in the process of heating the objects.

The second fireproof part 142 performs the same role as the first fireproof part 141 described above but is disposed to surround the first heating part 131, the second heating part 132, and the third heating part 133. For example, in a case in which each of the first heating part 131, the second heating part 132, and the third heating part 133 has a circular arc-shaped cross-section, the second fireproof part 142 has a cross-sectional shape surrounding and accommodating the circular arc-shaped cross-section. Accordingly, the second fireproof part 142 can prevent deterioration due to radiant heat in addition to preventing deterioration due to foreign matter entering in all directions.

The third fireproof part 143 performs the same role as the first fireproof part 141 and the second fireproof part 142 described above but is disposed outward from the first heating part 131, the second heating part 132, and the third heating part 133. Accordingly, a horizontal cross-sectional arrangement structure is formed in which the first fireproof part 141, the heating part, the second fireproof part 142, and the third fireproof part 143 are sequentially disposed in order of proximity to the central axis of the working part.

The temperature measurement part 124 is a component that measures a temperature of the working part or the heating part and allows the controller 170, which will be described below, to control an internal temperature of the working part based on the measured temperature. To this end, the temperature measurement part 124 may be located inside the working part. Here, the temperature measurement part 124 is a separate temperature sensing means and may be installed by being coupled to a separate deterioration preventing means that is not damaged at high temperatures.

The temperature measurement part 124 is disposed between the first working part 121 and the second working part 122, between the second working part 122 and the third working part 123, and below the third working part 123. Accordingly, each temperature measurement part 124 may measure the internal temperature of one of the first working part 121, the second working part 122, and the third working part 123.

In yet another embodiment of the present invention, each temperature measurement part 124 may be installed in one of the first working part 121, the second working part 122, and the third working part 123 and may have the same installation point. That is, each temperature measurement part 124 installed in one of the first working part 121, the second working part 122, and the third working part 123 has the same horizontal distance from the central axis of the working part and has the same vertical separation distance from each other. Therefore, an occurrence of thermal measurement errors can be minimized in each temperature measurement part 124 measuring an internal temperature of the working part.

The discharge part 150 is a component for withdrawing the objects from the working part and is located downward from the working part. Accordingly, the input part 110, the working part, and the discharge part 150 have a vertical heating structure while connected to each other, and as compared to a conventional horizontal heating structure, the vertical heating structure has an effect of facilitating movement of objects and a gas necessary for heating the objects.

In addition, a gas for heating the objects is initially input to the discharge part 150, and the gas (predetermined gas) induces firing of the objects by moving upward and then is discharged by moving to the input part 110.

The discharge part 150 includes a vertical movement part 151 for withdrawing the objects, a second pressing moving part 152 pressing and moving the objects, a gas supply part 153 inputting a predetermined gas, a second opening/closing part 154 partitioning an inner space, a second gas discharge part 155 ventilating the space partitioned by the second opening/closing part 154, and a cooling part 156 cooling the objects.

The vertical movement part 151 is a component moving the positions of the objects from inside the working part to inside the discharge part 150 and moves the objects and the storage part 20 containing the objects in the vertical direction while supporting them in the vertical direction. To this end, the vertical movement part 151 may be configured as a multi-stage support means whose length is adjustable in the vertical direction using electricity or a hydraulic pressure, and an upper end of the vertical movement part 151 may be configured in the form of a plate for firmer contact with the storage part 20. After the storage part 20, into which the objects are input, is heated by the heating part inside the working part, the storage part 20 moves downward together with the vertical movement part 151.

The second pressing moving part 152 is a component moving sideward to press and move the objects and the storage part 20 containing the objects that are disposed in the inner space of the discharge part 150 and is provided in the same manner as a first pressing moving part 111a which will be described below.

The gas supply part 153 is a component inputting a predetermined gas for firing of the objects into the discharge part 150 and is configured as a separate input means including a pump for inducing movement of a fluid such as a gas, but is not limited thereto. Here, the predetermined gas is provided as at least one or more of carbon monoxide, carbon dioxide, nitrogen, and argon that can induce heat treatment of the objects and create an inert gas atmosphere.

The second opening/closing part 154 is a component for dividing the inner space of the discharge part 150 into two or more portions to allow each portion of the inner space to be used for different purposes such as suspension of the storage part 20 and cooling of the storage part 20, and the second opening/closing part 154 has the same configuration as a first opening/closing part 113 which will be described below.

By the second opening/closing part 154 being closed, the inner space of the discharge part 150 may be divided into a suspension space connected to an inner space of the working part and a posttreatment space disconnected from the working part. The gas supply part 153 described above may be formed to correspond to the suspension space, and the second gas discharge part 155 and the cooling part 156 may be disposed in the posttreatment space.

The second gas discharge part 155 is a component ventilating at least one or more portions of the partitioned inner space of the discharge part 150 and may be configured as a discharge module including a discharge pump, but is not limited thereto. When the second opening/closing part 154 descried above is opened, the second gas discharge part 155 may ventilate the entire inner space of the discharge part 150. In addition, when the second opening/closing part 154 is closed, the second gas discharge part 155 may ventilate only an inner space of the posttreatment space.

The cooling part 156 is a component cooling the objects and the storage part 20 disposed in the posttreatment space and may be configured as a spraying means capable of spraying a gas having a predetermined temperature and may cool the objects and the storage part 20 in an air-cooling manner to prevent damage such as unintentional cracks therein. Here, the predetermined temperature may range from 50 °C to 100 °C and may be configured as a temperature that decreases by 10 °C every hour, but is not limited thereto.

A space into which a fixing part 160 can be inserted is secured between upper and lower storage parts 20. The fixing part 160 prevents unintentional changes in vertical positions of the storage parts 20 that contain objects and are heated together with the objects. To this end, the fixing part 160 is configured in the form of a plate that is located downward from the storage part 20 and has an upper surface coming into contact with a lower surface of the storage part 20 inside the working part. In addition, for more firmly fixing the height of the storage part 20, the fixing part 160 may be provided as a plurality of fixing parts 160, and the plurality of fixing parts 160 may be disposed in circular arrangement about the central axis of the working part.

By being further provided and disposed upward from the storage part 20, the fixing part 160 may induce the height of another storage part 20 located upward therefrom to be fixed. In order to further facilitate an input of a predetermined gas and create an air circulation structure inside the storage part 20, an insertion plate part 161 is further included, and the insertion plate part 161 includes a first inlet hole 161a, a second inlet hole 161b, and an auxiliary fixing part 161c. These will be described in more detail below.

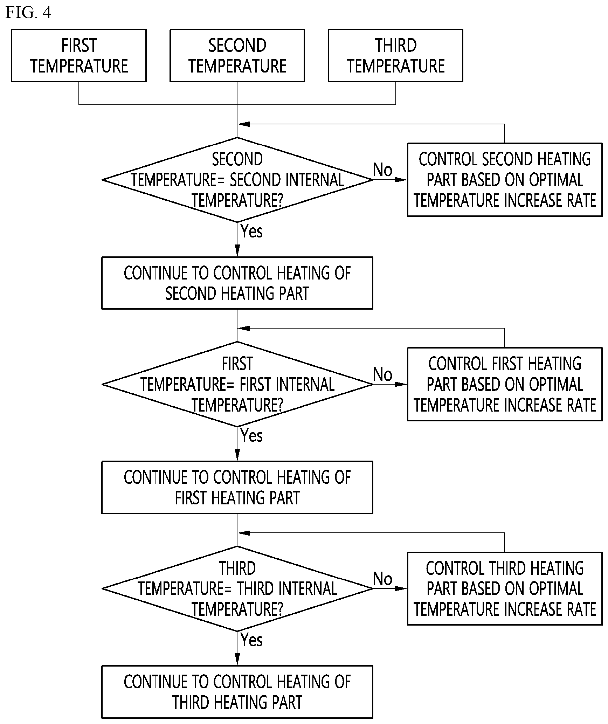

FIG. 4 is a view illustrating a process of controlling internal temperatures of a first working part, a second working part, and a third working part according to an embodiment of the present invention.

Referring to FIGS. 3 and 4, the controller 170 may control an operation of the heating part and may control the internal temperature of the working part while connected to the temperature measurement part 124 measuring the temperature of the heating part and/or the firing space inside the working part.

The temperature measurement part 124 located inside the working part the temperature measurement part 124 located inside the working part measures a first temperature, a second temperature, and a third temperature that correspond to the first working part 121, the second working part 122, and the third working part 123, respectively, and the controller 170 compares the measured first temperature, second temperature, and third temperature with the predetermined first internal temperature, second internal temperature, and third internal temperature.

First, the controller 170 compares the second temperature and the second internal temperature and controls an operation of the second heating part 132 based on a comparison result. Specifically, the controller 170 detects a temperature at a specific point in time and a temperature change amount of the second temperature and controls the operation of the second heating part 132.

When the second temperature is higher than or equal to the second internal temperature, the controller 170 controls the operation of the second heating part 132 so that the temperature inside the second working part increases at the optimal temperature increase rate.

In a case in which a change amount of the second temperature is lower than a preset temperature increase rate, the controller 170 controls the second heating part 132 to heat the objects so that the temperature inside the firing space increases at a predetermined temperature increase rate or higher.

When the second temperature is lower than the second internal temperature, the controller 170 calculates a temperature increase rate of the second working part 122 and controls the operation of the second heating part 132 so that the calculated temperature increase rate matches the optimal temperature increase rate. Here, by operating the second heating part 132 so that the temperature increase rate of the second working part 122 is higher than the optimal temperature increase rate for a predetermined amount of time (e.g., 10 seconds), and then controlling the temperature increase rate of the second working part 122 to match the optimal temperature increase rate, crack formation in the objects and reduction of the objects can be more easily induced.

After controlling the operation of the second heating part 132 according to comparison between the second temperature and the second internal temperature as described above, the controller 170 may control an operation of the first heating part 131 in the same manner based on a result of comparing the first temperature and the first internal temperature, and then may control an operation of the third heating part 133 in the same manner based on a result of comparing the third temperature and the third internal temperature.

The reason for controlling the internal temperature relating to the second working part 122 first among the first working part 121, the second working part 122, and the third working part 123 is to first maximize the thermal efficiency of the second working part 122 where the objects actually begin to be heated and reduced.

When the need for preheating the objects is high, the first heating part 131 may be controlled after adjusting the internal temperature of the second working part 122, and when the need for reduction of the objects is higher, the third heating part 133 may be controlled first after controlling the second heating part 132. That is, an order of controlling the first heating part 131 and the third heating part 133 may vary according to the amount of input objects and the type of input objects.

By controlling the operation of each heating part based on the temperature measured for each of the first working part 121, the second working part 122, and the third working part 123, a decrease in thermal efficiency for the objects can be prevented.

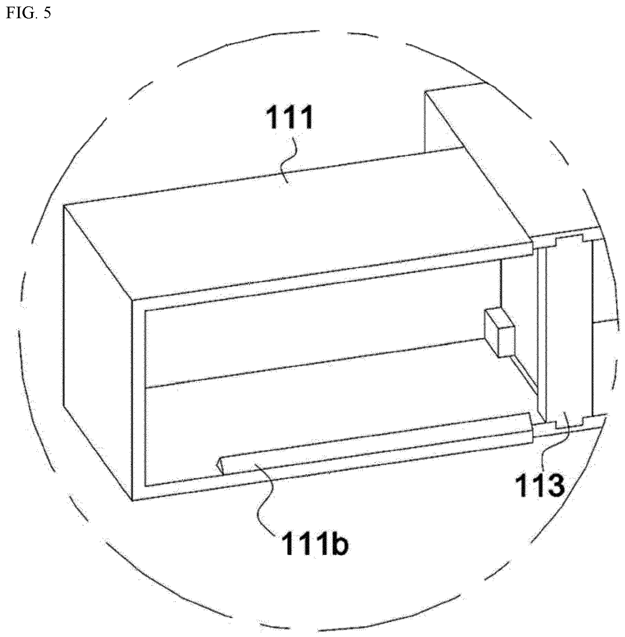

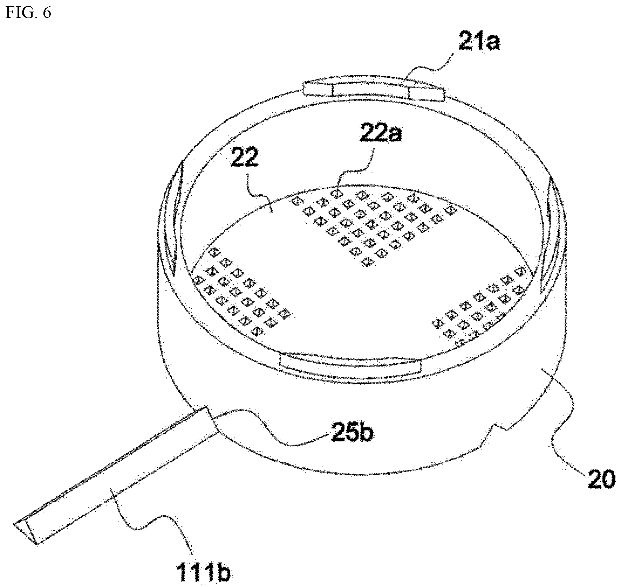

FIG. 5 is a cutout perspective view illustrating an insertion section part according to an embodiment of the present invention, FIG. 6 is a view illustrating a storage part moving to its correct position due to a first guide part according to an embodiment of the present invention, and in FIG. 5, the first pressing moving part 111a is omitted.

The insertion section part 111 provides a space for moving the storage part 20 closer to the working part. To this end, the insertion section part 111 includes the first pressing moving part 111a pressing and moving the storage part 20 and the first guide part 111b guiding the storage part 20 to its correct position, and the insertion section part 111 is provided in the form of a box that is connected to the standby section part 112 through opening/closing of the first opening/closing part 113.

The first pressing moving part 111a is a component moving the storage part 20 and moves the storage part 20, whose position has been moved from the outside of the input part 110 to the inside thereof, closer to the working part. Here, the movement of the storage part 20 is performed through a push of the first pressing moving part 111a. To this end, the first pressing moving part 111a may be provided as a hydraulic or electric pusher that receives a driving force from a separate driving means and has an end pressing and moving a tubular part, but is not limited thereto. In order to facilitate pressing and moving of the storage part 20, the first pressing moving part 111a may be configured to be close to the working part outside the insertion section part 111.

The first guide part 111b provides a path for more accurate movement guide in a process in which the storage part 20 moves due to the first pressing moving part 111a. To this end, the first guide part 111b is formed inside the insertion section part 111, is formed to protrude upward from a lower surface of the insertion section part 111, and is formed in a longitudinal direction to face the standby section part 112 and the working part.

The first guide part 111b is formed to be insertable into a lower end guide groove 25b formed in a body part 21 which will be described below. Specifically, a cross-sectional shape of the first guide part 111b is formed to be engageable with a cross-sectional shape of the lower end guide groove 25b. In this way, in a case in which the first guide part 111b is engaged with the lower end guide groove 25b, the storage part 20 can move in the longitudinal direction of the first guide part 111b.

In yet another embodiment of the present invention, the first guide part 111b may be configured in the form of a wedge having a triangular cross-section. In this way, it is possible to more easily guide movement of the storage part 20, and the storage part 20 can be prevented from being detached from the first guide part 111b in the guide process. Meanwhile, a second guide part 112b-1 having the same form as the first guide part 111b may be disposed upward from a movable partition part 112b located inside the standby section part 112.

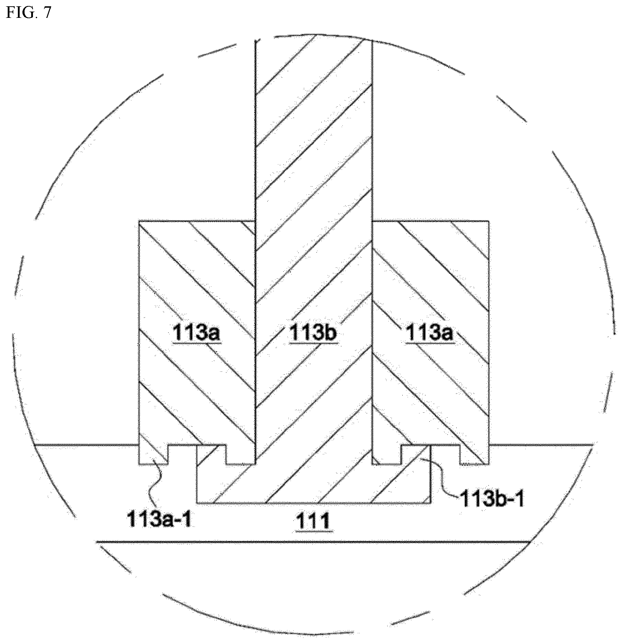

FIG. 7 is a cross-sectional view illustrating a first opening/closing part according to an embodiment of the present invention and illustrates a lower portion of the first opening/closing part 113.

The first opening/closing part 113 is formed in the insertion section part 111 and is located between the insertion section part 111 and the standby section part 112 to selectively open and connect the insertion section part 111 and the standby section part 112 and selectively allow movement of the storage part 20. To this end, the first opening/closing part 113 is provided in the form of a door and is opened/closed by sliding.

A fixing frame 113a is a component that serves as a door frame, maintains a fixed state, and induces sliding of a door part 113b. To this end, the fixing frame 113a is installed on an upper surface and a lower surface of the insertion section part 111. In addition, a pair of first protruding insertion parts 113a-1, formed on an upper surface or a lower surface of the fixing frame 113a, are disposed to be inserted into the upper surface or the lower surface of the insertion section part 111, and in this way, the fixed state of the fixing frame 113a is maintained.

Since the pair of fixing frames 113a are provided to come into contact with both surfaces of the door part 113b, the door part 113b is able to slide while fitted to the pair of fixing frames 113a. The first protruding insertion parts 113a-1 and the door part 113b may be engaged in a form of being fitted. That is, due to the pair of first protruding insertion parts 113a-1, the fixing frames 113a, the insertion section part 111, and the door part 113b are engaged with each other. Here, since the insertion section part 111 and the fixing frames 113a are fixed, only the door part 113b slides selectively.

The door part 113b is a component fitted to the upper and lower surfaces of the insertion section part 111 and opened/closed and is provided as a pair of slidable opening/closing means. To this end, the door part 113b has an upper end and a lower end inserted into the upper and lower surfaces, respectively, of the insertion section part 111, and simultaneously, the door part 113b is located between the pair of fixing frames 113a described above.

The door part 113b having second protruding insertion parts 113b-1 each formed to be curved or bent on one of an upper end and a lower end is configured in a trident-like form, and the second protruding insertion parts 113b-1 are engaged to come in surface contact with the first protruding insertion parts 113a-1. Accordingly, the door part 113b may slide while interposed between the insertion section part 111 and the fixing frames 113a. Meanwhile, the door part 113b described above may be configured as a pair of door parts 113b that are provided to touch each other or may be configured as a single door part 113b that is opened/closed by sliding.

A contact maintaining part 113b-2 is a component for, when a pair of door parts 113b are provided, maintaining airtightness between the door parts 113b. To this end, the contact maintaining part 113b-2 may be formed on each of the pair of door parts 113b by being formed on surfaces thereof facing each other and may be formed to have a thickness that is larger than a thickness of the door part 113b.

In yet another embodiment of the present invention, the pair of contact maintaining parts 113b-2 may have structures engaged with each other in an angular S-like shape. Accordingly, through more surface contact between the contact maintaining parts 113b-2, the airtightness of inner spaces of the insertion section part 111 and the standby section part 112 can be more firmly and easily maintained.

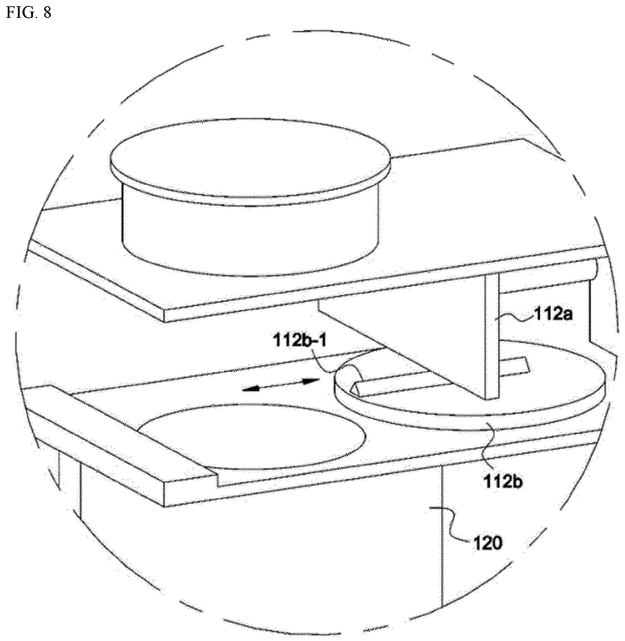

FIG. 8 is a cutout perspective view illustrating a standby section part according to an embodiment of the present invention in which the insertion section part 111 and the first opening/closing part 113, which are connected to the standby section part 112, are omitted.

The standby section part 112 is a component provided for the storage part 20 to wait before being input and provides a space in which an exhaust process for preventing an input of foreign matter is performed while sequential inputs of storage parts 20 are induced after the storage parts 20 are arranged into correct positions. To this end, the standby section part 112 includes a stopper 112a limiting movement of the storage part 20 and the movable partition part 112b controlling connection between the input part 110 and the working part. In addition, the standby section part 112 further includes a first gas discharge part 112c and a pressure maintaining part 112d for discharging a predetermined gas input for heating the objects and the storage parts 20.

The stopper 112a limits further movement of the storage part 20 that is guided to move to the working part by the first pressing moving part 111a and the first guide part 111b. To this end, the stopper 112a is provided in the form of a plate connected to a separate stretchable means having elasticity. As the storage part 20, whose movement is guided, comes into contact with the stopper 112a inside the standby section part 112, unintentional further movement of the storage part 20 can be prevented. To this end, preferably, a front surface of the stopper 112a may be disposed to correspond to a direction directly above from the working part.

In yet another embodiment of the present invention, a damage preventing part may be further provided on the front surface of the stopper 112a that comes into contact with the storage part 20. The damage preventing part is a component that has a restoration force and absorbs impact generated from the storage part 20. In this way, the stopper 112a or the storage part 20 can be prevented from being damaged in a collision process.

The movable partition part 112b is provided to, through opening/closing, control connection between inner spaces of the input part 110 and the working part. To this end, the movable partition part 112b is provided in a form corresponding to an open upper surface of the working part and reciprocates along a separate rail part formed on a lower surface inside the standby section part 112. In addition, the movable partition part 112b has a structure that is spaced from the stopper 112a in the vertical direction to not come into contact with the stopper 112a in a process in which the movable partition part 112b slides. Here, the movable partition part 112b may have a circular cross-section that corresponds to the open upper surface of the working part, but the movable partition part 112b is not limited thereto and may have various other cross-sectional shapes such as a quadrangular cross-section and a polygonal cross-section.

When the movable partition part 112b is located right above the working part and the standby section part 112 and the working part are disconnected from each other, the storage part 20 is not input into the working part, and a firing process for the storage part 20 is not performed.

On the other hand, when the movable partition part 112b located right above the working part slides, the inner spaces of the standby section part 112 and the working part are connected to each other. Accordingly, the storage part 20, which is pressed and moved from the insertion section part 111 toward the standby section part 112, may move downward from right above the working part and may be input into the working part.

The second guide part 112b-1 is a component providing a path for the storage part 20, whose input to the working part is limited by the movable partition part 112b, to maintain its correct position, is provided in the same form as the first guide part 111b described above, and is formed on an upper surface of the movable partition part 112b. Here, preferably, longitudinal directions of the first guide part 111b and the second guide part 112b-1 may be provided to be the same as each other.

In a state in which the movable partition part 112b is located right above the working part, further movement of the storage part 20 is limited by the stopper 112a, and the storage part 20 is located right above the working part in a state in which the second guide part 112b-1 prevents distortion of an angle of the storage part 20. Then, when the movable partition part 112b slides and deviates from right above the working part, the storage part 20 moves downward due to gravity and is input into the working part. In this way, even in a state in which worker intervention is minimized, arrangement and input of the storage part 20 toward the working part are possible.

The first gas discharge part 112c is provided to ventilate the inner space of the standby section part 112 and may automatically exhaust air inside the standby section part 112 as air outside the standby section part 112 enters according to an operation of a separate air blowing means. Here, in a state in which the first opening/closing part is open, air inside the insertion section part 111 may also be exhausted by the first gas discharge part.

The standby section part 112 according to the present invention further includes the pressure maintaining part 112d. The pressure maintaining part 112d is a component that performs the same role as the first gas discharge part 112c described above and discharges air inside the input part 110 in association with the controller 170 to prevent an excessive increase or decrease of an internal pressure. To this end, the pressure maintaining part 112d may be provided as a globe valve, a ball valve, a gate valve, etc., that is opened or closed by being connected to the controller 170.

The controller 170 according to the present invention is connected to the temperature measurement part 124 and the heating part described above and controls at least one or more of the temperature increase rate and the temperature increase time of the heating part to induce activation of a phenomenon of cracks that segment the objects.

Information relating to a predetermined temperature increase rate is prestored in the controller 170, and the controller 170 controls an increase rate relating to the temperature of the heating part based on the temperature increase rate-related information. Here, the temperature increase rate of the working part can be confirmed through Comparative Examples 1 and 2 and Example 1 below. In addition, an amount of input objects, a type of input objects, a method of heating objects, a temperature increase time, and an analysis method for measuring an optimal temperature increase rate of a firing space inside the working part are the same, and the temperature increase rate is varied to compare the degree of reduction of objects.

According to an embodiment, the heating part may be controlled so that the temperature inside the working part increases to a target operating temperature at a predetermined temperature increase rate or higher. **In** addition, it can be confirmed that the crack formation becomes active and reduction occurs actively after a certain period of time passes after the temperature inside the working part reaches the target operating temperature.

### Comparative Example 1

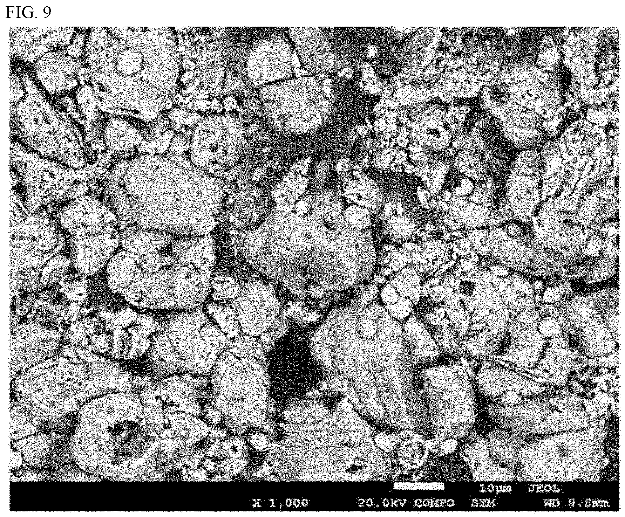

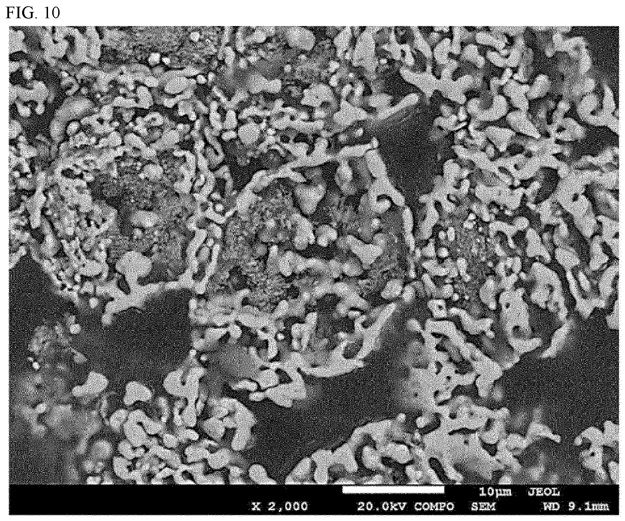

After inputting objects into the working part, the objects were heated by controlling the heating part for the temperature increase rate to be 20 K/min in relation to the operating environment inside the working part, and 30 minutes and 40 minutes after the objects were heated to a target temperature, samples were recovered from the objects, and scanning electron microscope (SEM)-backscattered electron (BSE) analysis was performed. Analysis results of Comparative Example 1 are shown in FIGS. 9 and 10. Here, the operating temperature for recycling of objects was set to 850 °C, and this was the same for both Comparative Example 2 and Example 1.

30 minutes after the temperature inside the working part reached the operating temperature, 850 °C, at the temperature increase rate of 20 K/min, the degree of cracks in the objects was insignificant as shown in FIG. 9 in an environment in which the temperature increase rate was 20 K/min. Corresponding thereto, it can be confirmed that the degree of reduction of the objects was also insignificant after 40 minutes as shown in FIG. 10.

### Comparative Example 2

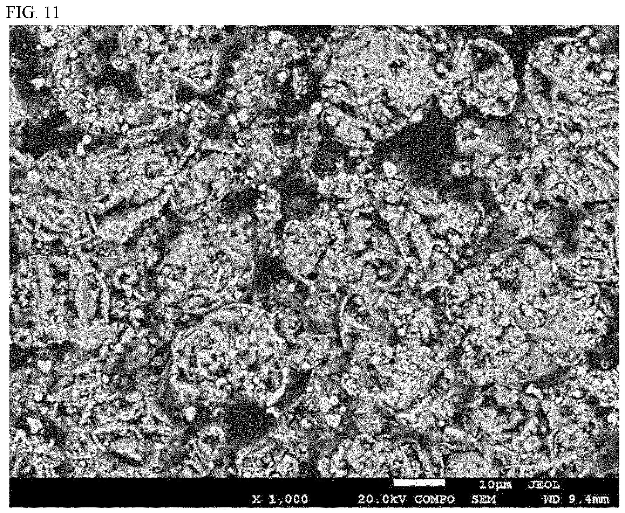

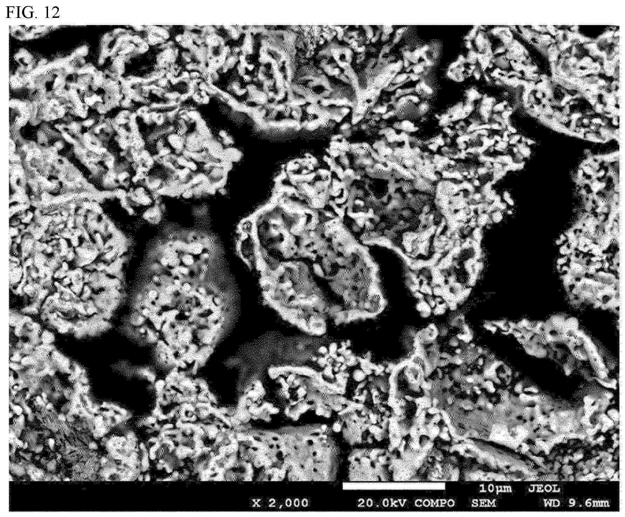

After inputting objects into the working part, the objects were heated by controlling the heating part for the temperature increase rate to be 30 K/min in relation to the operating environment inside the working part, and 30 minutes and 40 minutes after the objects were heated to the target temperature, samples were recovered from the objects, and SEM-BSE analysis was performed. Analysis results of Comparative Example 2 are shown in FIGS. 11 and 12.

30 minutes after the temperature of the objects increased to the operating temperature, 850 °C, it can be confirmed that more cracks were formed in the objects compared to Comparative Example 1 as shown in FIG. 11, and it can be confirmed that more reduction of the objects occurred after 40 minutes as shown in FIG. 12.

In this way, it can be confirmed that when the objects are heated at a higher temperature increase rate compared to Comparative Example 1, the objects need to be sufficiently broken for a predetermined gas consisting of a reducing gas to be input into the objects.

### Example 1

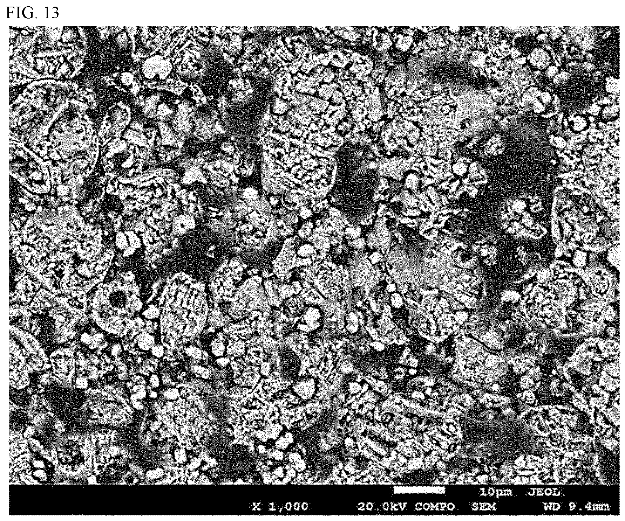

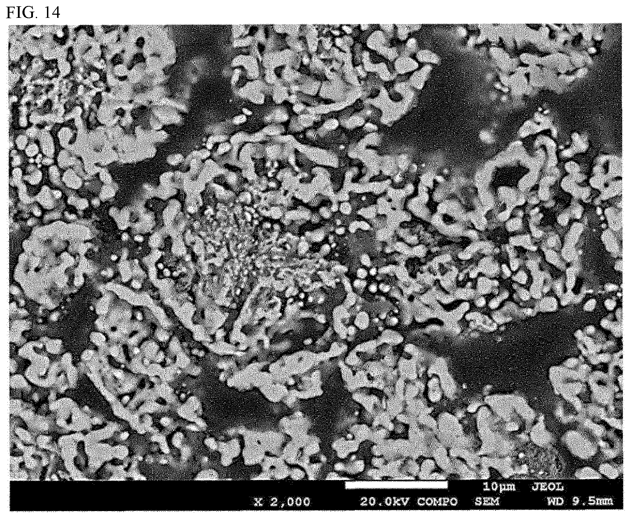

After inputting objects into the working part, the objects were heated by controlling the heating part for the temperature increase rate to be 22 K/min in relation to the operating environment inside the working part, and 30 minutes and 40 minutes after the temperature increased to the target operating temperature, samples were recovered from the objects, SEM-BSE analysis was performed, and analysis results relating thereto are shown in FIGS. 13 and 14.

Referring to FIG. 13, it can be confirmed that more cracks were formed in the objects compared to Comparative Example 1, but the degree of crack formation was not much different compared to Comparative Example 2. In addition, referring to FIG. 14, it can be confirmed that more reduction of the objects occurred as compared to Comparative Example 1, but the degree of reduction was not much different compared to Comparative Example 2.

In this way, it can be confirmed that an optimal temperature increase rate for the objects is configured to be 22 K/min or higher. It can be confirmed that, while a recovery rate of cobalt that may be recovered from the objects was 70% in Comparative Example 1, the recovery rate of cobalt was 95% in Example 1.

The controller 170 may, by controlling the heating part so that the temperature of the working part increases for a temperature increase time based on the above optimal temperature increase rate, induce reduction to easily occur by a predetermined gas permeating into the objects.

In addition, the controller 170 creates and controls a work environment of the working part in a process of heating the objects and recovering valuable metals consisting of at least one or more of cobalt (Co), nickel (Ni), manganese (Mn), copper (Cu), a nickel-cobalt (Ni-Co) alloy, and lithium (Li). Specifically, the controller 170 controls an operation of the gas supply part 153 described above and induces a predetermined gas to be input into the discharge part 150. Then, the predetermined gas moves along the working part located upward from the discharge part 150, comes into contact with the objects in the movement process, and creates a reducing gas atmosphere.

The working part including the first working part 121, the second working part 122, and the third working part 123 heat-treats the objects under a predetermined mixed reducing gas atmosphere, and the predetermined mixed reducing gas atmosphere is determined according to partial pressures of carbon dioxide and carbon monoxide contained in the predetermined gas. Here, when carbon monoxide is generated in a process of heat treatment on the objects, the generated carbon monoxide may be reflected in setting a partial pressure in the working part.

Here, the controller 170 may input the predetermined gas through the gas supply part 153 or may exhaust the predetermined gas through the first gas discharge part 112c so that log(PCO2/PCO), which is a logarithmic value of a division value of the partial pressure of carbon monoxide and the partial pressure of carbon dioxide, ranges from -2.15 to 2.5. Specifically, the logarithmic value (log(PCO2/PCO) based on the division value of the partial pressure between carbon monoxide and carbon dioxide belongs to the range of -2.15 to 2.5, and the logarithmic value is adjusted to decrease with an increase in the internal temperature of the working part.

When the first internal temperature, the second internal temperature, and the third internal temperature corresponding to the first working part 121, the second working part 122, and the third working part 123, respectively, correspond to at least one of a range of 500 to 600 °C, a range of 600 to 700 °C, a range of 700 to 800 °C, a range of 800 to 900 °C, and a range of 900 to 1,000 °C, the controller 170 controls additional input or discharge of the predetermined gas through the input part 110 and the first gas discharge part 112c so that the logarithmic value described above belongs to at least one range among a range from 0.45 to 2.50, a range of -0.20 to 2.15, a range of -0.90 to 1.85, a range of -1.55 to 1.60, and a range of -2.15 to 1.40.

For example, the controller 170 may suppress carbon generation by adjusting an amount of input carbon dioxide contained in the predetermined gas to not be small in the process of heat-treating the objects and may shorten a heat treatment process time by adjusting the input amount to not be excessive.

When the amount of input predetermined gas is excessive, the controller 170 may open the first gas discharge part 112c formed in the input part 110 and exhaust the predetermined gas. In order to first minimize pressure gradient, which may occur in the process of exhausting the predetermined gas, for the inner space of the input part 110, an exhaust process inside the input part 110 by the pressure maintaining part 112d may precede or be performed in parallel.

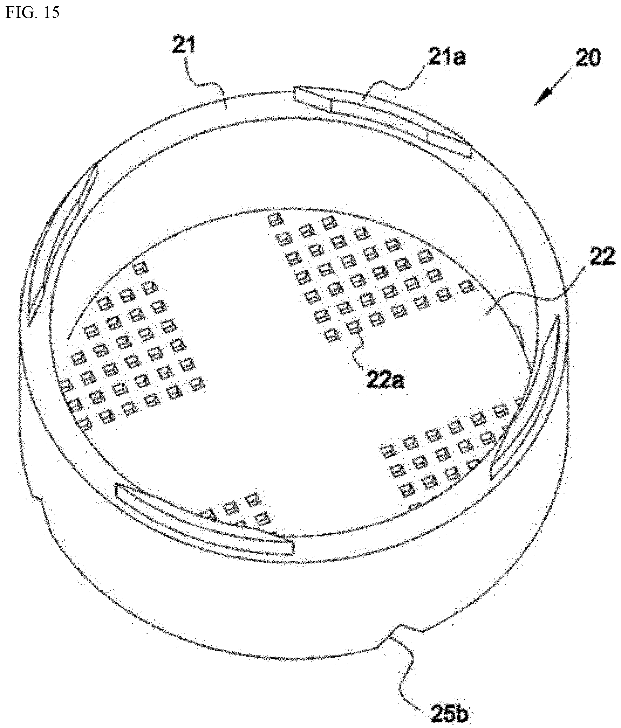

FIGS. 15 to 24 are views relating to the storage part 20, various embodiments may be configured according to configurations formed in the storage part 20, and different embodiments may be freely combined.

FIG. 15 is a view illustrating the storage part 20 according to an embodiment of the present invention.

The storage part 20 is a component that induces processing, such as heating, to be more easily performed in a state in which objects are stored in the storage part 20, and to this end, the storage part 20 is configured in a form with an open upper surface. More specifically, the storage part 20 has an exterior in the form of a circular frame and has a space in which objects may be placed.

Since the storage part 20 has a circular rim shape, as compared to a conventional saggar having a polygonal rim shape such as a quadrangular rim shape, it is possible to address a problem in which heat is not applied to a vertex portion where two surface portions come into contact and heat transfer imbalance occurs.

The body part 21 is a component for collecting objects and is formed in the shape of a circular frame. Accordingly, a mesh part 22 and an inner space in which objects may be placed are created, and objects input from above are heated together with the body part 21 in a state in which lower surfaces of the objects are loaded inside the body part 21. In addition, a plurality of first through-holes 21c are formed in the body part 21, and the plurality of first through-holes 21c are configured to have circular arrangement about a central axis of the body part 21.

A first coupling part 21a and a second coupling part 21b are formed on an upper side and a lower side, respectively, of the body part 21 and are provided for engagement with another body part 21 located above or below. To this end, the first coupling part 21a is formed in an embossed manner by protruding from an upper surface of the body part 21, and the second coupling part 21b is formed in an engraved manner in a lower surface of the body part 21 and corresponds to the size and form of the first coupling part 21a. However, even when the first coupling part 21a and the second coupling part 21b are coupled, the space into which the fixing part 160 can be inserted is secured between the upper and lower storage parts 20 coupled to each other. Meanwhile, the body part 21 may not have the second coupling part 21b.

In yet another embodiment of the present invention, the first coupling part 21a may have an aggregate structure in which wedges having a peak facing upward are arranged along the circumference of the body part 21. That is, by being provided in the form of a sawtooth, the first coupling part 21a can maximize a binding strength between a pair of body parts 21 disposed in the vertical direction.

The mesh part 22 is provided for the purpose of having higher heating efficiency in the process of heating the objects. To this end, the mesh part 22 is located inward from the body part 21 and is configured in the form of mesh that is formed to be open in a lattice form.

In addition, the mesh part 22 is configured in the form of a plate and may have a plurality of through-holes (second through-holes 22a) formed therein. In this way, there is an effect of increasing the stability of arrangement of the objects.

The lower end guide groove 25b that may identically apply to all embodiments according to the present invention is a component devised to enable movement of the storage part 20 in the horizontal direction in a state in which the storage part 20 is disposed at its correct position, and the lower end guide groove 25b is located downward from the storage part 20. In addition, the lower end guide groove 25b is formed to correspond to the size and shape of the first guide part 111b and the second guide part 112b-1, which will be described below, and is formed to pass through the body part 21.

In yet another embodiment of the present invention, two or more lower end guide grooves 25b may be formed in an engraved manner in the body part 21 in a plurality of directions. For example, as in FIG. 15, lower end guide grooves 25b may be formed in four different directions. The storage part 20 including the lower end guide grooves 25b may be guided to rotate corresponding to the position and direction of the first guide part 111b or the second guide part 112b-1 and moved.

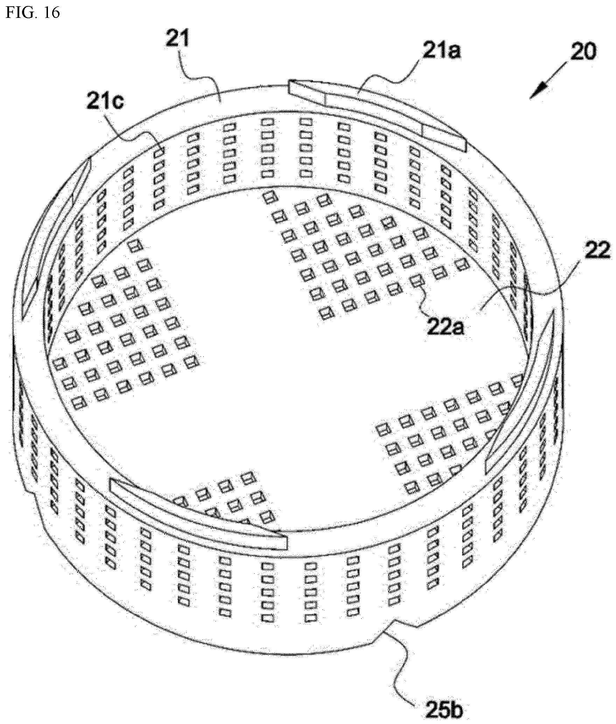

FIG. 16 is a view illustrating a storage part according to another embodiment of the present invention.

Referring to FIG. 16, through the first through-holes 21c and the second through-holes 22a formed in the body part 21 and the mesh part 22, respectively, a circulation structure in which a predetermined gas disposed outside is more easily input to and discharged from the storage part 20 can be created. Therefore, there is an effect of significantly increasing heat treatment efficiency for the objects located inside the storage part 20.

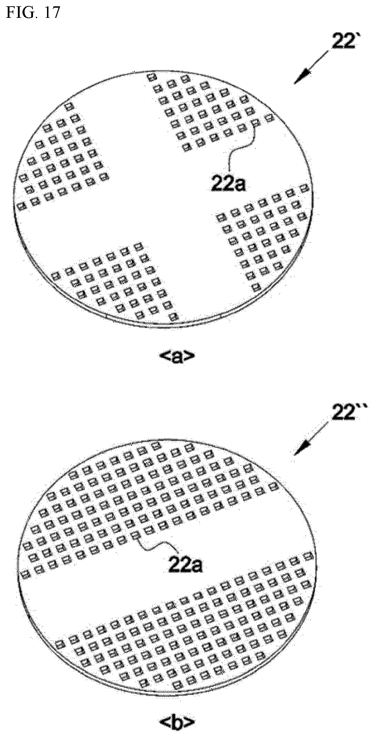

FIG. 17 is a view illustrating an embodiment of a mesh part according to the present invention.

Various embodiments may be implemented according to the number and arrangement of the plurality of through-holes formed in the mesh part 22. Specifically, as in FIG. 17A, a mesh part 22' may be provided to increase an amount of introduced predetermined gas input from the outside and to classify and diversify the types of objects to be heated. In addition, as in FIG. 17B, a mesh part 22" may be provided to further limit the types of objects being heated at once and to increase the number of heated objects.

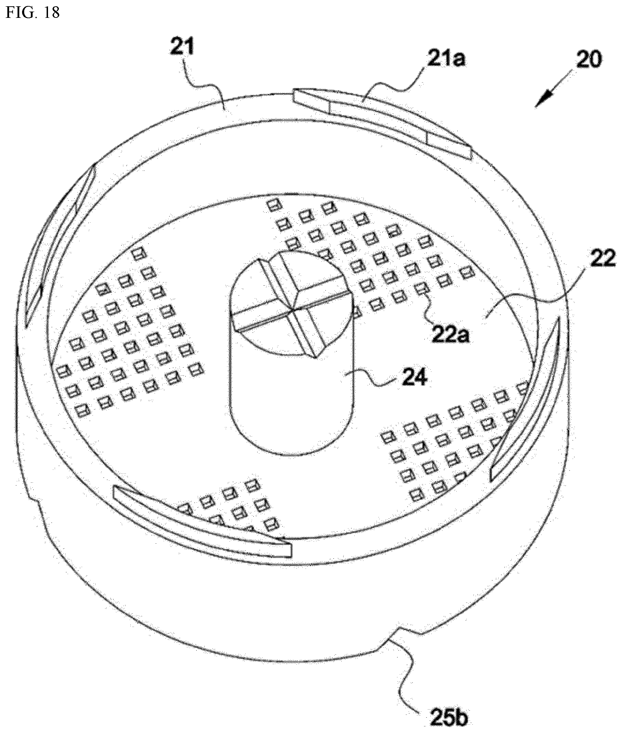

FIG. 18 is a view illustrating a storage part having an upper end engaging part and a lower end engaging part formed thereon and shows yet another embodiment of a storage part.

An upper end engaging part 24 and a lower end engaging part 25 are components that induce fastening and support between a plurality of storage parts 20 by coming into contact with each other. To this end, the upper end engaging part 24 and the lower end engaging part 25 are formed upward and downward, respectively, from a division part 23. Here, an upper end of the upper end engaging part 24 and a lower end of the lower end engaging part 25 are each formed in the shape of a wedge to be able to come into contact with each other. Accordingly, in a pair of storage parts 20 disposed in the vertical direction, the lower end engaging part 25 formed on the storage part 20 disposed above and the upper end engaging part 24 formed on the storage part 20 disposed below come into surface contact with each other.

A height of an end of the upper end engaging part 24 that faces upward may be provided to be lower than or equal to a height of an end of the first coupling part 21a described above. Accordingly, there is an effect of doubly increasing a support force for the pair of storage parts 20, which are disposed in the vertical direction and of which the first coupling part 21a and the second coupling part 21b are engaged, by contact between the upper end engaging part 24 and the lower end engaging part 25. In addition, when the fixing part 160 is inserted between a plurality of first coupling parts 21a, since a predetermined gas is easily input between the body part 21 and the fixing part 160, it is possible to derive an effect of maximizing thermal efficiency.

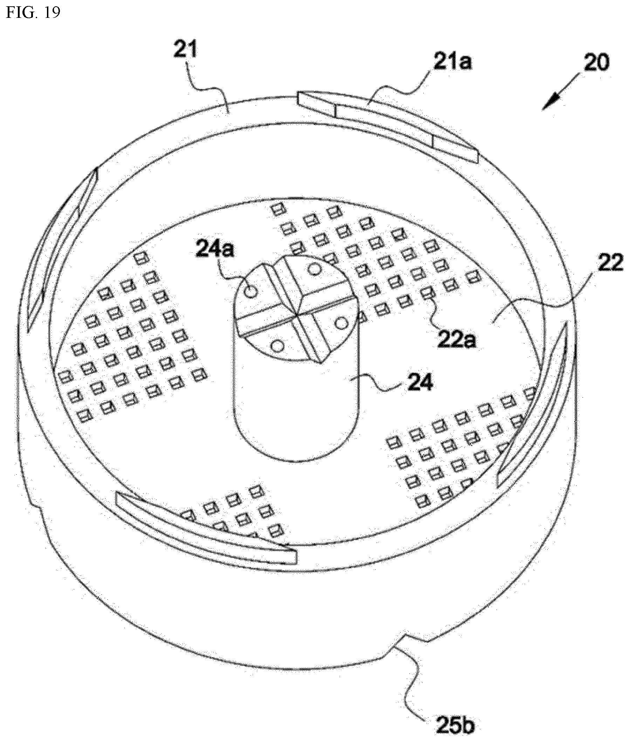

FIG. 19 is a view illustrating a storage part having a first contact part and a second contact part further formed thereon and shows yet another embodiment of a storage part.

Support performance between storage parts 20 can be maximized through a first contact part 24a and a second contact part 25a. The first contact part 24a and the second contact part 25a are formed on the upper end engaging part 24 and the lower end engaging part 25, respectively. Here, the first contact part 24a has a structure formed to protrude upward from the upper end engaging part 24 and is formed in various shapes such as a hemispherical shape and a polyhedral shape, and the second contact part 25a is formed in an engraved manner in the lower end engaging part 25 to correspond to the size and shape of the first contact part 24a. Accordingly, when a pair of storage parts 20 are disposed in the vertical direction so that the upper end engaging part 24 and the lower end engaging part 25 thereof come into contact with each other, the first contact part 24a is inserted into the second contact part 25a. Therefore, a more firmly fixed state can be maintained based on the surface contact between the upper end engaging part 24 and the lower end engaging part 25 and the insertion structure between the first contact part 24a and the second contact part 25a described above. Further, since the pair of storage parts 20 are disposed so that the first contact part 24a is inserted into the second contact part 25a, there is an effect of making it easy to arrange the storage parts 20 into correct positions.

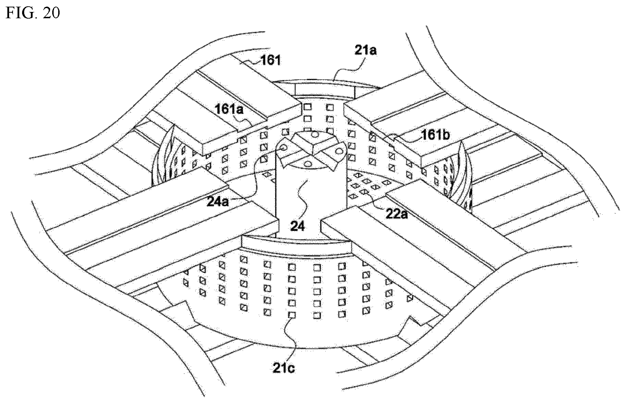

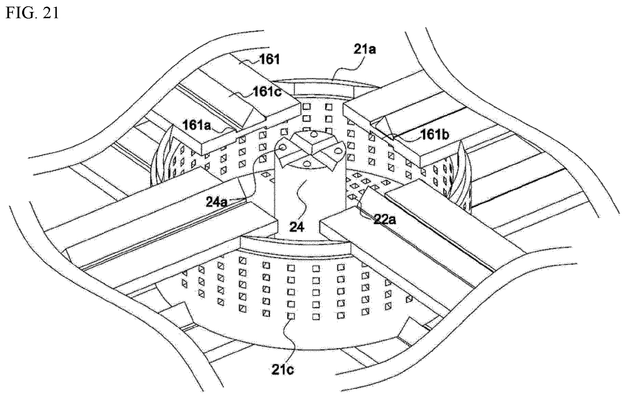

FIG. 20 is a view illustrating the storage part being fixed by a fixing part according to the present invention, and FIG. 21 is a view illustrating another embodiment of a storage part being fixed by a fixing part according to the present invention.

The fixing part 160 described above includes the insertion plate part 161, the first inlet hole 161a, the second inlet hole 161b, and the auxiliary fixing part 161c.

The insertion plate part 161 is a component located upward and downward from the storage part 20 to fix the height of the storage part 20. To this end, the insertion plate part 161 is installed inside the working part and has a structure that is withdrawable to be close to the central axis of the working part. In addition, the insertion plate part 161 comes into contact with a lower surface of the storage part 20 or is inserted between the plurality of first coupling parts 21a formed on the storage part 20. In this way, the position of the storage part 20 is fixed in the vertical direction.

The first inlet hole 161a and the second inlet hole 161b induce a predetermined gas, which is input into the working part, to be easily input into the storage part 20. To this end, the first inlet hole 161a and the second inlet hole 161b are formed in an upper surface and a lower surface, respectively, of the insertion plate part 161 and are formed in the longitudinal direction of the insertion plate part 161. Accordingly, the insertion plate part 161 has a cross-sectional structure having a step partially formed in the vertical direction.

The predetermined gas moved from the discharge part 150 to the working part moves along the first inlet hole 161a and the second inlet hole 161b, which are formed in the insertion plate part 161, in a process of moving toward the storage part 20 and is naturally input into the storage part 20. Accordingly, even while minimizing worker intervention, the input of the gas into the storage part 20 can be automatically induced, and simultaneously, movement of the storage part 20 can be suppressed, and the objects located inside the storage part 20 can be prevented from scattering unintentionally.

The auxiliary fixing part 161c is a component strengthening a fixing strength between the insertion plate part 161 and the storage part 20 and is configured as a bar-shaped member having the same cross-sectional area and shape as the first guide part 111b and the second guide part 112b-1 located on the input part 110. When the insertion plate part 161 on which the auxiliary fixing part 161c is formed is disposed in the vertical direction of the storage part 20, the auxiliary fixing part 161c may be inserted into the lower end guide groove 25b formed in the storage part 20 and may induce the storage part 20 to be arranged into its correct position.

The auxiliary fixing part 161c is formed in the first inlet hole 161a, and a width of a base side of the auxiliary fixing part 161c is configured to be smaller than a width of the first inlet hole 161a. Accordingly, since the first inlet hole 161a is not completely blocked by the auxiliary fixing part 161c, a function of inputting a gas into the storage part 20 can be maintained.

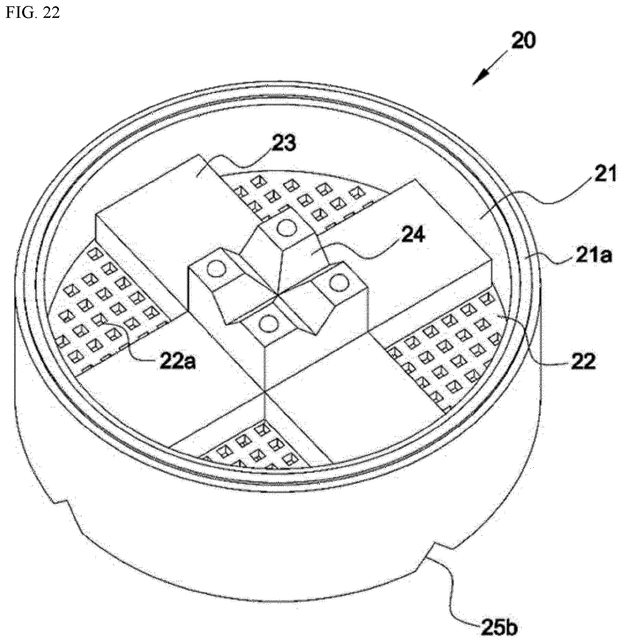

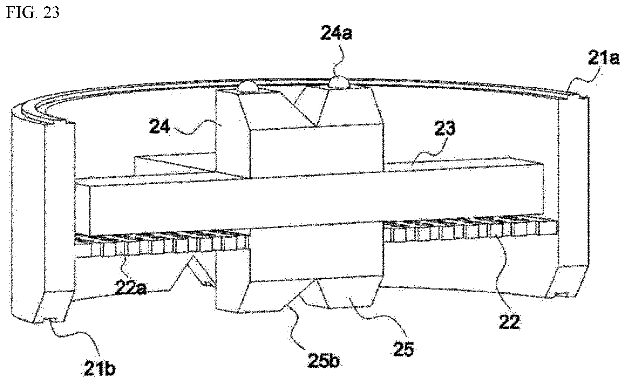

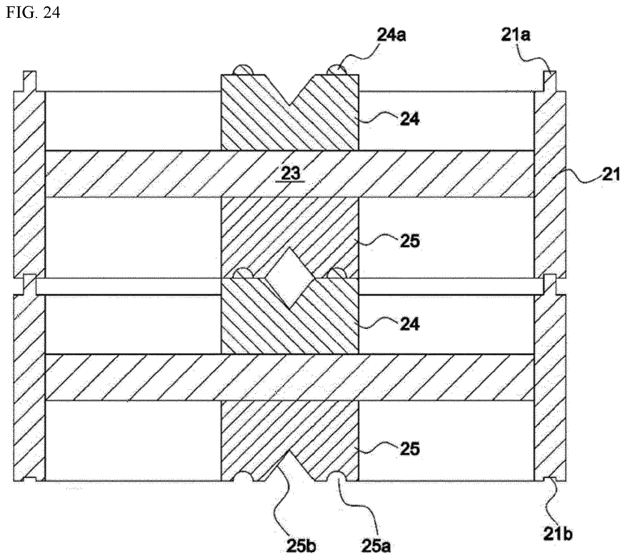

FIG. 22 is an overall view of a storage part according to an additional embodiment of the present invention, FIG. 23 is a cutout perspective view of the storage part according to the additional embodiment, and FIG. 24 is a cross-sectional view illustrating arrangement of a pair of storage parts in a vertical direction according to the additional embodiment of the present invention.

The above-described body part 21, mesh part 22, first coupling part 21a, second coupling part 21b, upper end engaging part 24, and lower end engaging part 25 may apply identically to the additional embodiment disclosed as in FIGS. 22 to 24.

The mesh part 22 may be connected to an inner surface of the body part 21 and may be disposed at a position that is upward and spaced from a lower surface of the body part 21. Meanwhile, although the drawings show that a single mesh part 22 is provided, two or more mesh parts 22 may be arranged in the vertical direction and may induce higher thermal efficiency for objects.

The division part 23 is located inside the body part 21, imparts a position at which the mesh part 22 is fixed, and allows the body part 21 to be supported in the vertical direction. To this end, the division part 23 is configured as a bar- or stick-shaped member and has a structure in which an end comes into contact with the inner surface of the body part 21. In yet another embodiment of the present invention, the division part 23 is formed in a "+" shape and has four ends coming into contact with the body part 21, thereby allowing firmer support and allowing different types of objects to be input and heated separately from each other.

An inner space of the body part 21 may be partitioned by the division part 23. At the same time, the mesh part 22 disposed inside the body part 21 may be integrally configured with the body part 21 and may cause portions of the space to be separated from each other. In this way, there is an effect of allowing objects having different compositions or forms to be heated independently. Meanwhile, the upper end engaging part 24 and the lower end engaging part 25, which have been described above, are formed upward and downward, respectively, from the division part 23.

When two or more storage parts 20 are input to the working part through the input part 110, the storage parts 20 are arranged in the vertical direction and heated. In this process, the second coupling part 21b, the lower end engaging part 25, and the second contact part 25a included in the storage part 20 located above are engaged to the first coupling part 21a, the upper end engaging part 24, and the first contact part 24a included in the storage part 20 located below by coming into contact therewith or being inserted thereinto.

The plurality of storage parts 20 having the above-described multi-contact and engagement structure can be supported more firmly in the vertical direction and can easily be arranged into correct positions, thereby minimizing worker intervention.

Although embodiments of the present invention have been described above with reference to the accompanying drawings, those of ordinary skill in the art to which the present invention pertains should understand that the present invention can be embodied in other specific forms without changing the technical spirit or essential features thereof. Therefore, the embodiments described above should be understood as illustrative, instead of limiting, in all aspects.

### [Modes of the Invention]

The modes of the invention have been described above in the best mode of the invention.

### [Industrial Applicability]

The present invention can provide an apparatus for vertical recycling of waste batteries.

## Claims

1. An apparatus for vertical recycling of waste batteries, the apparatus comprising:
a heating part heating objects located inside a working part;
a temperature measurement part measuring a temperature of the working part or the heating part; and
a controller controlling an internal temperature of the working part.

2. The apparatus of claim 1, further comprising:
an input part feeding the objects to the working part; and
a discharge part withdrawing the objects from the working part.

3. The apparatus of claim 2, wherein the input part includes a movable partition part controlling connection of an inner space between the working part and the input part.

4. The apparatus of claim 1, wherein the working part includes:
a first working part where a first internal temperature is created;
a second working part having a second internal temperature at a lower side of the first working part; and
a third working part having a third internal temperature at a lower side of the second working part,
wherein the controller sets a range of each of the first internal temperature, the second internal temperature, and the third internal temperature.

5. The apparatus of claim 4, further comprising a fixing part formed between the first working part and the second working part or the third working part to fix positions of the objects.

6. The apparatus of claim 1, wherein:
the heating part includes a first heating part, a second heating part located at a lower side of the first heating part, and a third heating part located at a lower side of the second heating part; and
the first heating part, the second heating part, and the third heating part are operated independently or together by the controller.

7. The apparatus of claim 1, further comprising a fireproof part protecting the heating part inside the working part, wherein the fireproof part includes:
a first fireproof part located inward from the heating part;
a second fireproof part disposed to surround the heating part; and
a third fireproof part located outward from the heating part.

8. The apparatus of claim 2, further comprising a gas supply part inputting a predetermined gas to the working part from inside the discharge part,
wherein the predetermined gas consists of at least one or more of carbon monoxide, carbon dioxide, nitrogen, and argon.

9. The apparatus of claim 2, further comprising:
a second opening/closing part partitioning an inner space of the discharge part; and
a second gas discharge part ventilating at least one or more portions of the partitioned inner space of the discharge part.

10. The apparatus of claim 1, further comprising a storage part into which the objects are input to move and be heated together,
wherein the storage part includes a body part having first through-holes and a mesh part located inside the body part and having second through-holes.
